# FASCICULE DE BREVET EUROPEEN

(11) **EP 2 004 429 B1**
(45) Date de publication et mention de la délivrance du brevet: **15.06.2011**
(21) Numéro de dépôt: 07731867.3
(22) Date de dépôt: 04.04.2007
(51) Int. Cl.: B60G 21/05, B60G 7/02

(54) **TRAIN ARRIERE POUR VEHICULE AUTOMOBILE**
HINTERACHSE EINES FAHRZEUGES, IM BESONDEREN EINES KRAFTFAHRZEUGES, SOWIE MIT DIESER HINTERACHSE AUSGESTATTETES FAHRZEUG
REAR AXLE OF A VEHICLE, IN PARTICULAR A MOTOR VEHICLE, AND VEHICLE EQUIPPED WITH SUCH A REAR AXLE

(30) Priorité: 11.04.2006 FR 0651304
(43) Date de publication de la demande: 24.12.2008
(73) Titulaire: Peugeot Citroën Automobiles SA, 78140 Vélizy-Villacoublay (FR)
(72) Inventeur: LEFEVRE, Eric, 78370 Plaisir (FR)
(86) Numéro de dépôt international: PCT/FR2007/051064
(87) Numéro de publication internationale: WO 2007/116179

(56) Documents cités:
- JP-A- 3 057 779
- JP-A- 2006 069 475

## Description

### Domaine technique

La présente invention concerne concerne, de façon générale, un train arrière de véhicule, notamment de véhicule automobile.

Elle concerne plus particulièrement un train arrière tel que divulgué dans le document JP 2006-069475 comprenant au moins un bras longitudinal ayant une première extrémité articulée dans une chape autour d'un axe d'articulation, ladite chape étant fixée au châssis du véhicule au moyen d'un dispositif de fixation et la seconde extrémité du bras étant destinée à être liée à un support d'une roue arrière du véhicule.

### Technique antérieure

La définition d'un train arrière est spécifique à chaque modèle de véhicule, voire parfois même spécifique à chaque variante d'un même modèle. Afin de pouvoir répondre aux exigences de performances déterminées pour chaque modèle de véhicule, voire pour chaque variante d'un modèle, le train arrière est défini spécifiquement selon l'architecture du châssis du véhicule automobile, le comportement dynamique du véhicule, par exemple sportif ou pas sportif, et bien d'autres paramètres.

Dans le but d'optimiser l'outil industriel, la demanderesse a développé une stratégie dite de plateforme de fabrication. Par plateforme, on entend une base de fabrication commune à partir de laquelle seront décliné différentes silhouettes de véhicules automobiles afin de limiter la diversité et de simplifier la logistique des pièces à tenir à disposition pour les étapes de ferrage et de montage de ces véhicules. Cependant, cette communauté de pièces souhaitée sur une même plateforme ne concerne pas tous les domaines, certains ayant des organes spécifiques à une silhouette.

Il en est ainsi du domaine des liaisons au sol où un certain nombre d'organes diffèrent entre des véhicules issus d'une même plateforme. Ainsi, le train arrière d'un véhicule peut présenter des paramètres d'architecture différents, comme l'orientation de l'axe d'articulation du bras longitudinal sur le châssis, ou une technologie différente : train semi-rigide ou train multibras.

Ces différences sont généralement très importantes et empêchent de réaliser des trains roulants communs assurant un niveau de performance répondant au cahier des charges habituel pour ce qui est des prestations de comportement routier, d'agrément de conduite et de sécurité active.

### Exposé de l'invention

Le but de l'invention est de remédier aux inconvénients indiqués ci avant. Plus particulièrement, l'invention propose un train arrière tel que décrit ci-avant comprenant un dispositif de fixation, sur le châssis, des chapes des bras longitudinaux indépendant de la technologie et/ou de l'orientation de l'axe d'articulation desdits bras longitudinaux. Ce dispositif de fixation est commun aux véhicules issus de la même plateforme de fabrication et ne nécessite qu'un minimum de pièces tout en assurant le respect des critères de performance.

Ce dispositif de fixation assure plus particulièrement la solidarisation de la chape du bras longitudinal sur un longeronnet du châssis, ledit longeronnet présentant une partie plane et une partie incurvée correspondant à une diminution de l'épaisseur du longeronnet imposée par l'encombrement du train arrière et du passage des roues correspondantes. La chape de train est généralement fixée à proximité de cette partie incurvée pour limiter l'encombrement du bras longitudinal. Ainsi, il est connu de ménager des trous de fixation de la chape sur les parties plane et incurvée du longeronnet, imposant ainsi un montage des vis de fixation selon deux directions distinctes. Ce type de montage est donc complexe et nécessairement réalisé par des opérateurs.

Pour pallier cet inconvénient, l'invention propose un dispositif de fixation permettant un montage du train selon une direction unique, en l'occurrence la direction normale à la partie plane du longeronnet, tout en fixant la chape à proximité de la partie incurvée du longeronnet. Ainsi, l'invention permet en outre un montage selon la direction verticale de la chape de train arrière sur le longeronnet, permettant d'automatiser et de simplifier cette opération de montage.

Avantageusement, l'invention propose une solution assurant une articulation de la chape de train sensiblement dans le plan de la partie plane du longeronnet, correspondant à la fibre neutre de ce longeronnet. Ainsi, le couple de déformation en cas d'effort sur ladite articulation est annulé du fait que l'axe de cette articulation s'étend dans la fibre neutre du longeronnet. L'invention évite tout phénomène de couple sur cette articulation.

Le but de l'invention est atteint avec un train arrière de véhicule, notamment de véhicule automobile, comprenant deux bras longitudinaux comportant chacun une extrémité articulée dans une chape de train autour d'un axe d'articulation, ladite chaque chape de train étant fixée sur le châssis du véhicule au moyen d'un dispositif de fixation, caractérisé en ce que ledit dispositif de fixation comprend un support de chape disposé entre la chape de train et le châssis, ledit support de chape comportant une plaque fixée solidairement sur le châssis et présentant une découpe commune conformée pour recevoir des chapes de train présentant des axes d'articulation de direction différente, ladite chape étant fixée sur ledit support par des moyens de fixation.

La présente invention a notamment pour avantage d'être applicable quelque soit la technologie du train, train semi-rigide et train multibras, sur une même silhouette de véhicules pour une même plateforme, en reprenant intégralement le même dispositif de fixation et le même longeronnet. Ce dispositif de fixation est constitué de moyens de fixation et d'un support de chape apte à recevoir plusieurs types de chape de train, lesdites chapes assurant une orientation différente de l'axe d'articulation du bras longitudinal afin de gérer la diversité angulaire des deux types de train. Les moyens de fixation et le support de chape restent communs, permettant ainsi de n'avoir aucune diversité au ferrage et au montage et donc assurant un gain économique.

Conformément à d'autres caractéristiques avantageuses de l'invention :
- l'axe d'articulation s'étend sensiblement dans le plan de la découpe du support de chape ;
- les moyens de fixation sont orientés dans la même direction afin d'assurer une fixation de la chape de train sur le support de chape selon cette même direction ;
- une partie des moyens de fixation liée au châssis et au support de chape, l'autre partie desdits moyens de fixation n'étant pas liée au châssis.

L'invention se rapporte également à un véhicule équipé d'un train arrière comme décrit ci avant, le châssis dudit véhicule présentant une découpe en vis-à-vis de la découpe au travers de laquelle pénètre partiellement la chape de train.

Selon une caractéristique, la chape est fixée sur un longeronnet du châssis, ledit longeronnet présentant une partie plane prolongée par une partie incurvée correspondant à une diminution de l'épaisseur du longeronnet, et en ce que l'axe d'articulation s'étend partiellement en regard de la partie incurvée dans un plan parallèle à la partie plane du longeronnet.

Selon une autre caractéristique, le support de chape est partiellement en contact avec la partie plane du longeronnet, ledit support de chape prolongeant ladite partie plane en vis-à-vis de la partie incurvée et assurant le positionnement de l'articulation dans un plan sensiblement parallèle à ladite partie plane.

Avantageusement, l'axe d'articulation s'étend sensiblement dans un plan passant par la fibre neutre du longeronnet.

La présente invention concerne également les caractéristiques ci après :
- le support de chape comporte des trous disposés autour de la découpe et destinés à laisser passer les moyens de fixation, et en ce que la partie plane du longeronnet comporte au moins un trou en vis-à-vis d'un trou du support de chape, un des moyens de fixation traversant le longeronnet et le support de chape à travers lesdits trous ;
- le support de chape comporte des trous disposés en regard de la partie incurvée du longeronnet, et en ce que ladite partie incurvée ne comporte aucun trou en regard desdits trous du support de chape, les moyens de fixation traversant uniquement le support de chape à travers lesdits trous du support de chape.

### Description sommaire des dessins

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 montre une moitié d'un train arrière multibras selon l'invention en vue de dessous ;
- la figure 2 montre une moitié d'un train arrière multibras selon l'invention selon une vue de dessous en perspective ;
- la figure 3 montre une moitié d'un train arrière semi-rigide selon l'invention en vue de dessous ;
- la figure 4 montre une moitié d'un train arrière semi-rigide selon l'invention selon une vue de dessous en perspective ;
- la figure 5 montre, en vue de dessous, le dispositif de fixation sur le châssis d'un bras longitudinal de train multibras selon l'invention ;
- la figure 6 est une vue identique à celle de la figure 5 pour un train semi-rigide selon l'invention ;
- la figure 7 est une vue de dessous en perspective du dispositif de fixation sur le châssis d'un bras longitudinal de train multibras selon l'invention ;
- la figure 8 est une vue identique à celle de la figure 7 pour un train semi-rigide selon l'invention ;
- la figure 9 montre, en une vue en perspective de dessus, le système de fixation sur le châssis d'un bras longitudinal de train multibras selon l'invention ;
- la figure 10 est une vue identique à celle de la figure 9 pour un train semi-rigide selon l'invention ;
- la figure 11 est une vue en coupe selon l'axe A-A des figures 5 ou 6 ;
- la figure 12 est une vue en coupe selon l'axe B-B des figures 5 ou 6 ;
- la figure 13 est une vue en coupe selon l'axe C-C de la figure 5 ;
- la figure 14 est une vue en coupe selon l'axe D-D de la figure 6 ;
- la figure 15 est une vue en perspective du support de chape du dispositif de fixation selon l'invention ;
- la figure 16 est une vue en perspective de la chape de train pour un train arrière multibras selon l'invention ;
- la figure 17 est une vue en perspective de la chape de train pour un train arrière semi-rigide selon l'invention.

### Manière(s) de réaliser l'invention

Dans les figures, les mêmes références sont utilisées pour désigner des pièces identiques ou ayant des fonctions similaires. On a représenté seulement une moitié de train arrière sur les figures, l'autre moitié étant symétrique par rapport à un plan passant par l'axe longitudinal du véhicule.

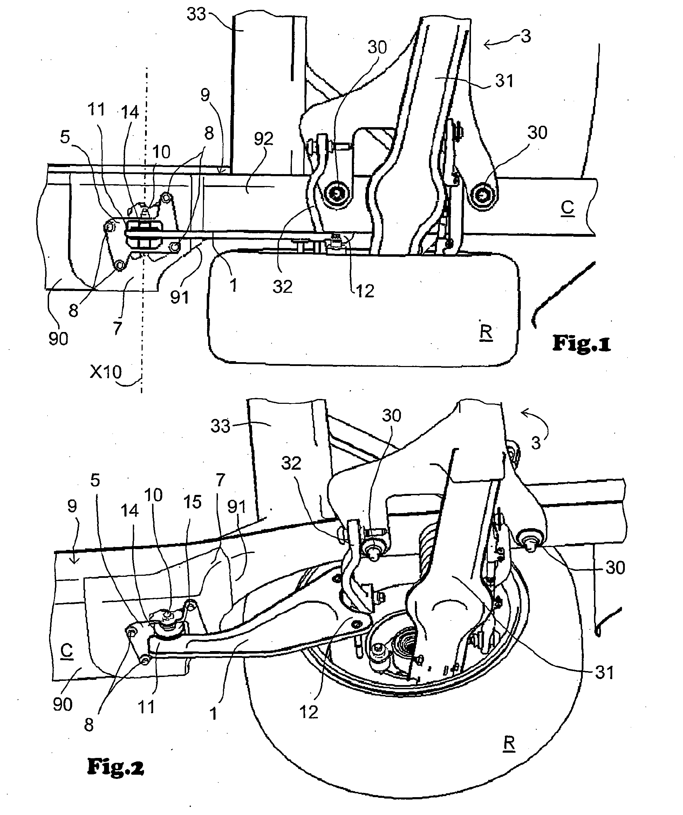

Comme représenté sur les figures 1 et 2, un demi train arrière multibras équipant un véhicule automobile comprend un bras longitudinal 1 reliée à la roue arrière R correspondante. Chaque bras longitudinal 1 du train comporte deux extrémités opposées référencées 11, 12:
- la première extrémité 11 est fixée au châssis C du véhicule automobile au moyen d'une articulation pivot ; et
- la seconde extrémité 12 est liée au support de montage de la roue arrière R correspondante, par exemple au moyen d'une articulation du type connu.

Le train arrière multibras comprend par ailleurs une traverse de train 3 destinée à être fixée au châssis C du véhicule automobile par des éléments de fixation 30. Ce train arrière multibras comprend en outre une barre anti-dévers 33 et, pour chaque roue arrière R :
- un bras transversal inférieur 31 articulé sur la traverse de train 3 et relié au support de la roue R correspondante par une liaison pivot ;
- un bras transversal supérieur non représenté ;
- une bielle de pince 32 assurant un guidage du bras longitudinal 1.

La disposition et le nombre de ces éléments formant le train multibras sont donnés ici à titre non limitatif.

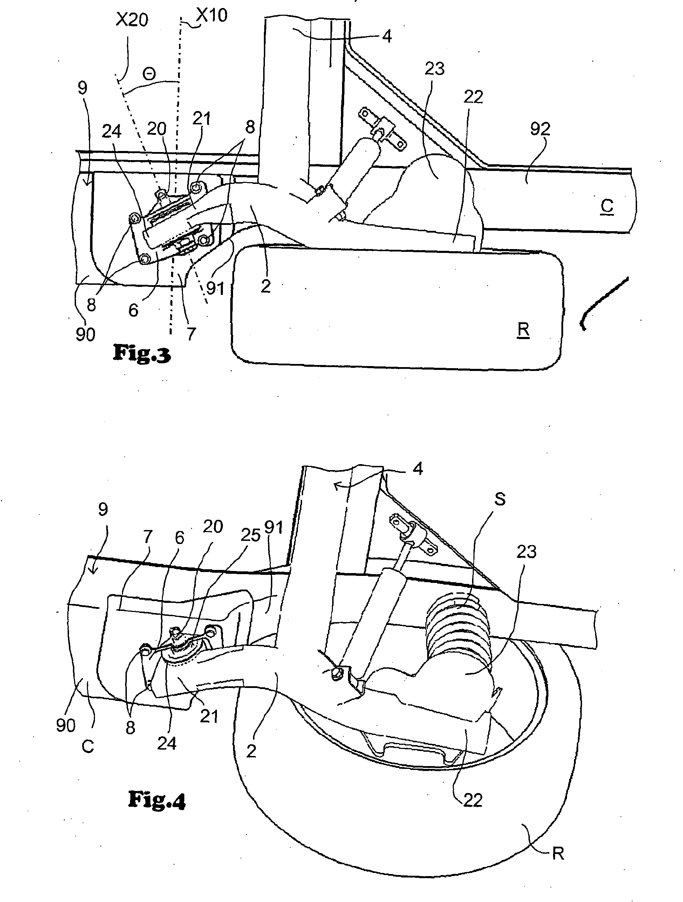

Comme représenté aux figures 3 et 4, un demi train arrière semi-rigide, ou demi train à traverse déformable, équipant un véhicule automobile, comprend également un bras longitudinal 2 reliée à la roue arrière R correspondante. Chaque bras longitudinal 2 du train comporte deux extrémités opposées référencées 21, 22 :
- la première extrémité 21 est fixée au châssis C du véhicule automobile au moyen d'une articulation pivot ; et
- la seconde extrémité 22 est liée au support de montage de la roue arrière R correspondante, par exemple au moyen d'une platine de fixation solidaire de ladite seconde extrémité 22.

Les bras longitudinaux 2 sont reliés par une traverse de train 4 et chacun de ces bras 2 présente en outre, à sa seconde extrémité 22, des moyens de coopération 23 avec un élément de suspension S ; ledit élément de suspension S étant lié au châssis C du véhicule.

La traverse 4 d'un train semi-rigide présente la particularité d'être rigide en flexion et souple en torsion. Pour obtenir de tels caractéristiques mécaniques, il est connu d'employer des traverses déformables de section longitudinale de forme spécifique, qui peut être en U, en V ou en Y.

La disposition et la forme des éléments du train arrière semi-rigide sont données à titre non limitatif.

Chaque bras longitudinal, respectivement 1 pour le train multibras et 2 pour le train semi-rigide, est articulé, par sa première extrémité respectivement 11 et 21, sur le châssis C du véhicule autour d'un axe d'articulation respectivement 10 et 20 s'étendant sensiblement dans un plan horizontal. On entend par plan horizontal, le plan défini par le châssis C du véhicule.

Préférentiellement, l'axe d'articulation 10, 20 est fixé sur un longeronnet 9, élément du châssis C. Ce longeronnet 9 est constitué d'une poutre, s'étendant selon une direction sensiblement longitudinale du véhicule, qui comporte une paroi inférieure sur laquelle sont fixé les éléments du train. Cette paroi se décompose principalement en trois parties :
- une partie plane 90 s'étendant dans un plan sensiblement horizontal ;
- un partie incurvée 91 correspondant à une diminution de l'épaisseur du longeronnet 9 dans les directions verticale et transversale du véhicule ; et
- une partie à épaisseur réduite 92, dont la forme et la largeur sont imposées par l'encombrement du train arrière et le passage de la roue R correspondante.

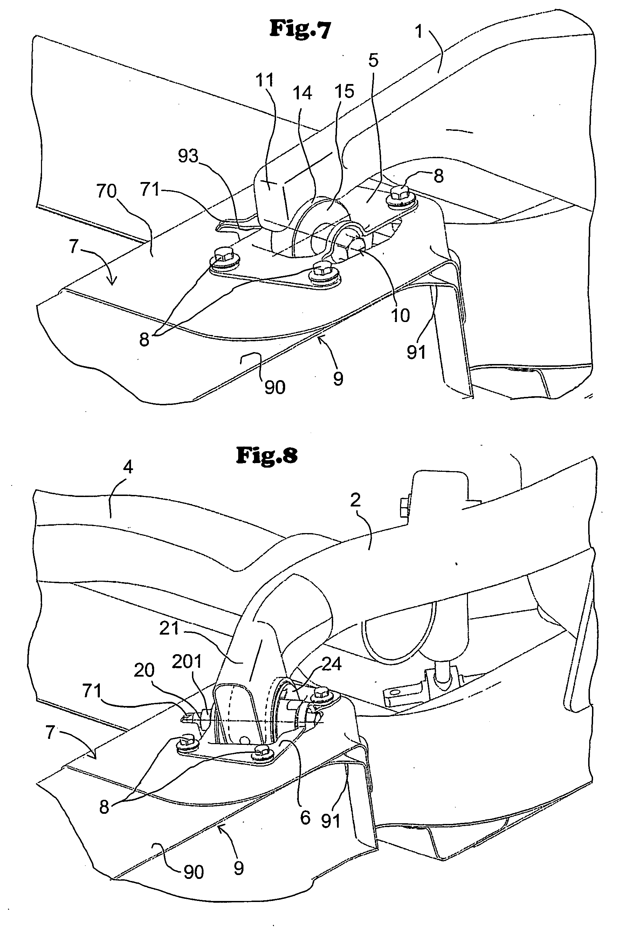

Comme représenté sur les figures 7 et 8, la partie incurvée 91 prolonge la partie plane 90 et forme un angle inférieure à 90° par rapport à la partie plane 90 ; cette partie incurvée se prolongeant elle-même par une paroi transversale, normale à la partie plane 90.

La première extrémité 11, 21 comprend une bague 14, 24 formant un orifice transversal circulaire traversé par l'axe d'articulation 10, 20.

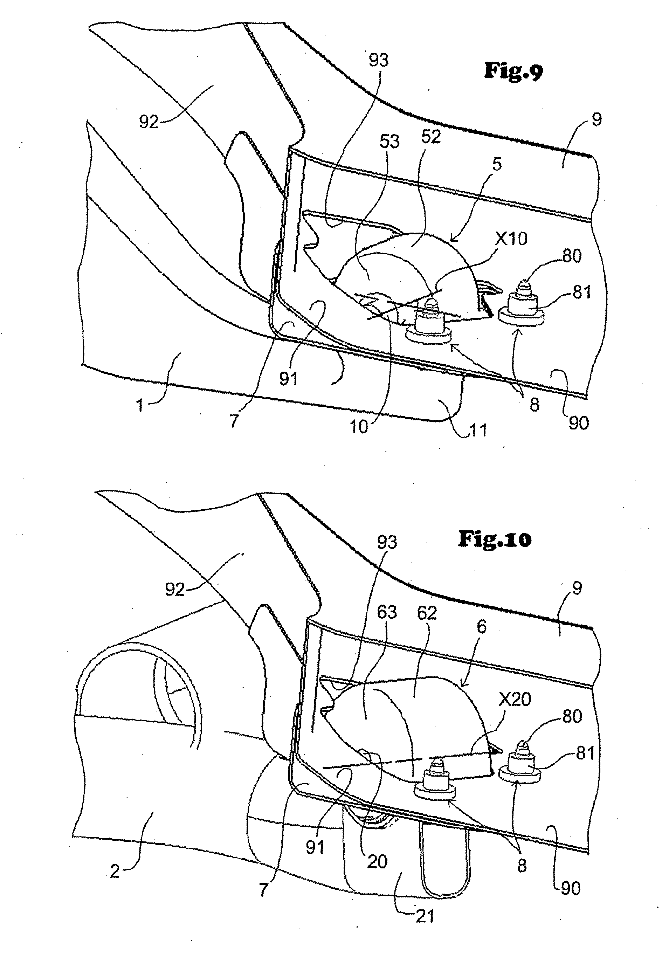

Comme représenté sur les figures 9 et 10, l'axe d'articulation 10, 20 est monté libre en rotation dans des ailes 53, 63 de la chape de train 5, 6.

De plus, afin d'éviter tout phénomène de couple de l'articulation, les axes d'articulation 10, 20 s'étendent sensiblement dans le plan de la partie plane 90 du longeronnet 9, autrement dit dans la fibre neutre du longeronnet 9. Ainsi et comme représenté en figure 9 et 10, la chape de train 5, 6 est partiellement encastrée dans le châssis C à travers une découpe 93 ménagée dans la paroi inférieure du longeronnet 9.

Pour des raisons d'encombrement des bras longitudinaux 1 et 2, les axes d'articulation 10 et 20 sont disposées sensiblement dans la partie incurvée 91 de la paroi inférieure du longeronnet 9.

Comme représenté en figure 1, l'axe d'articulation 10 du train multibras s'étend selon une direction X10, représentée par une ligne en trait mixte, sensiblement transversale. L'axe d'articulation 20 du train semi-rigide s'étend selon une direction X20 inclinée d'un angle Θ par rapport à la direction transversale, comme représenté en figure 3 par une ligne en trait mixte.

Le but de l'invention est d'assurer l'articulation de la première extrémité 11, 21 du bras 1, 2 avec un dispositif de fixation commun quelque soit l'orientation de l'axe d'articulation 10, 20 dudit bras 1, 2, tout en répondant aux contraintes suivantes :
- l'articulation s'étend sensiblement dans un plan passant par la fibre neutre du longeronnet 9 ;
- l'axe d'articulation est disposé dans la partie incurvée 91 de la paroi inférieure du longeronnet 9 ; et
- le montage du système de fixation s'effectue selon une direction verticale, c'est-à-dire une direction sensiblement normale à la partie plane 90 de la paroi inférieure du longeronnet 9.

Pour cela, un support de chape 7 est solidairement lié au longeronnet 9. La liaison solidaire est assurée par exemple par un procédé de soudage classiquement connu. Ce support de chape 7 forme un élément commun du dispositif de fixation.

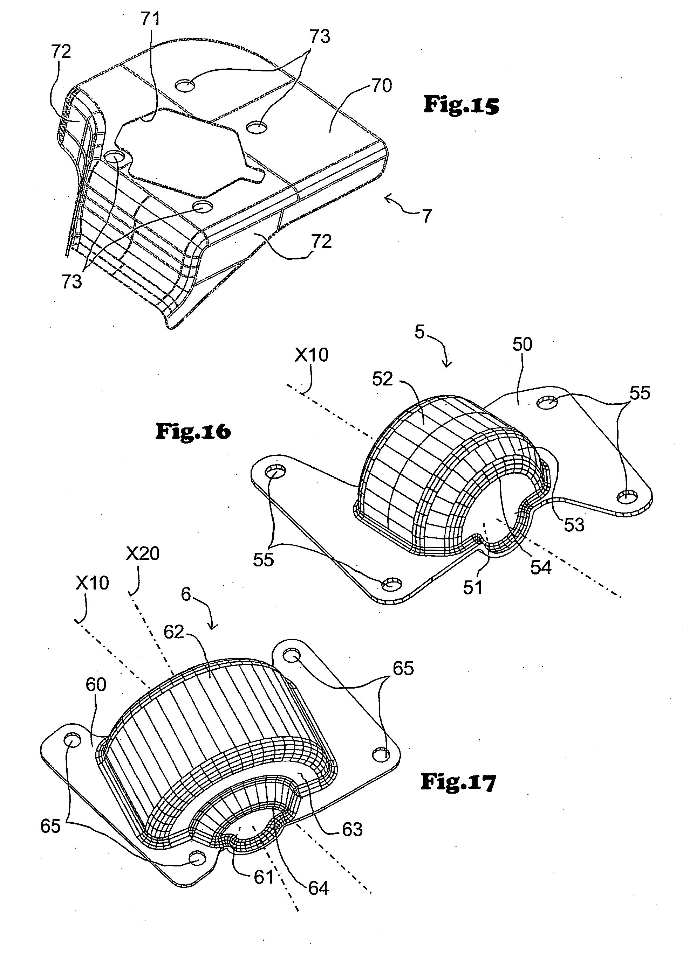

Comme représenté en figure 15, le support de chape 7 comporte :
- une plaque supérieure 70 apte à venir en contact sur la partie plane 90 du longeronnet 9, et présentant une découpe 71 destinée à être en vis-à-vis de la découpe 93, ladite plaque 70 n'étant pas destinée à être en contact avec le longeronnet 9 dans sa partie incurvée 91 ;
- des parois latérales 72 s'étendant partiellement sur la périphérie de la plaque 70, et destinées à être en contact sur les parois transversales du longeronnet 9 ; et
- plusieurs trous 73 disposés autour de la découpe 71 et destinés à laisser passer des moyens de fixation 8, comme par exemple des ensembles vis/écrou.

Dans le mode de réalisation représenté en figure 15, la plaque 701 est sensiblement rectangulaire et comporte quatre trous 73 de passage des moyens de fixation 8.

Comme représenté en figures 16 et 17, la chape de train 5, 6 comporte :
- une embase 50, 60 destinée à être en contact avec la plaque 70 et présentant une ouverture 51, 61 ;
- une demi coque 52, 62 faisant saillie de l'embase 50, 60 et présentant la forme générale d'un demi cylindre recouvrant l'ouverture 51, 61 ;
- deux ailes latérales 53, 63, sensiblement parallèles l'une à l'autre, formant paroi entre l'embase 50, 60 et la demi coque 52, 62 ; et
- plusieurs trous 55, 65 destinés à coopérer avec les trous 73 du support de chape 7.

Les ailes 53, 63 de la chape de train 5, 6 présentent des ouvertures 54, 64 pour l'engagement de l'axe d'articulation 10, 20. Les ailes 53 de la chape 5 du train multibras sont orientées sensiblement perpendiculairement à la direction X10 de l'axe d'articulation 10, et les ailes 63 de la chape 6 du train semi-rigide sont orientées sensiblement perpendiculairement à la direction X20 de l'axe d'articulation 20.

Ainsi, les trous 55, 65 étant positionnés en vis-à-vis des trous 73 correspondants du support de chape 7, les chapes de train 5 et 6 diffèrent essentiellement par l'orientation des ailes latérales 53, 63 donnant la direction X10, X20 des axes d'articulation 10, 20.

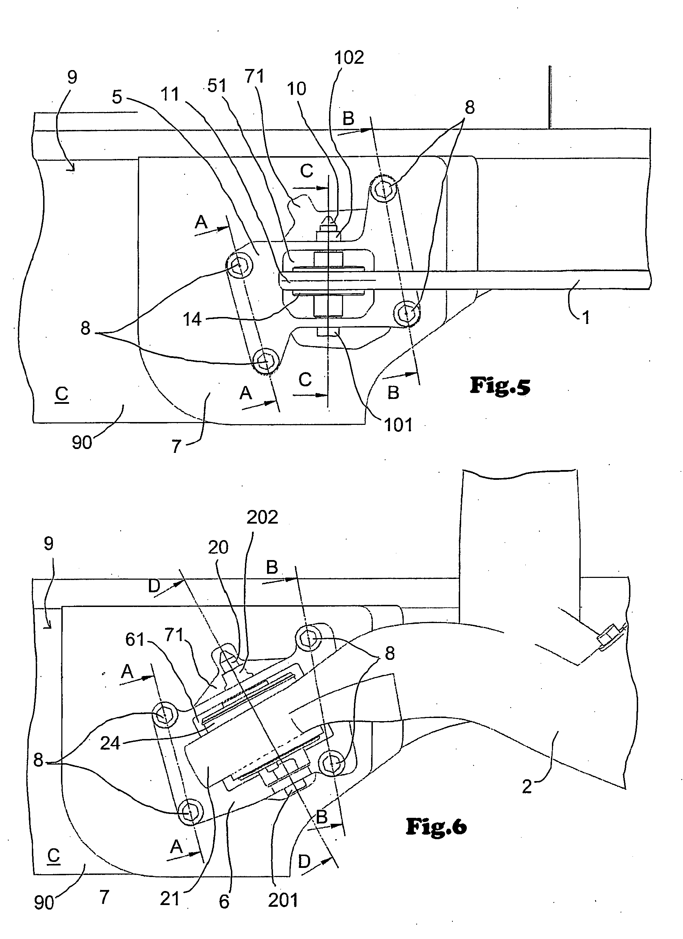

Comme représenté sur les figures 5 et 6, la chape de train 5, 6 est liée au support de chape 7 par les moyens de fixation 8.

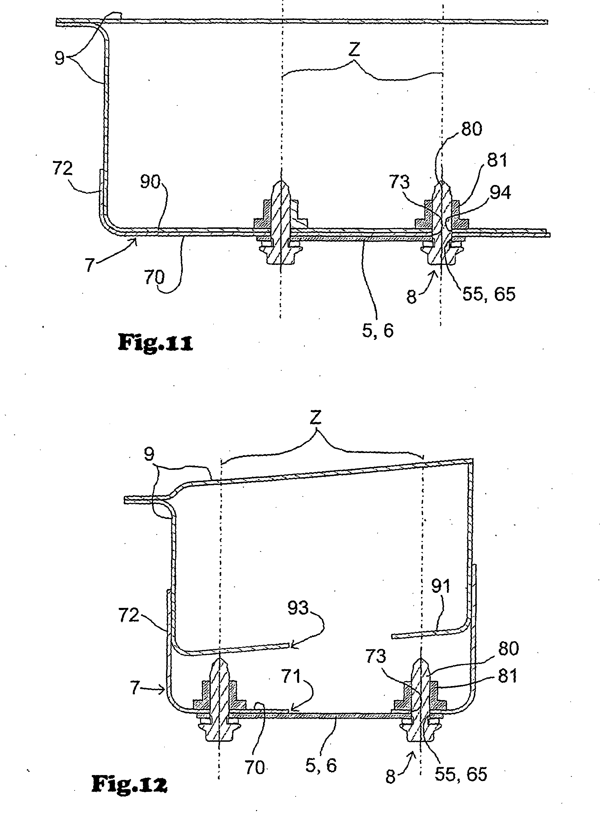

Les figures 11 et 12 représentent des vues en coupe du train arrière selon l'invention dans des plans verticaux passant respectivement par les deux trous 73 du support de chape 7 en regard de la paroi plane 90 du longeronnet 9 et par les deux autres trous 73 en regard de la partie incurvée 91 de ce même longeronnet 9. Sur ces deux figures, les moyens de fixation 8 sont tous orientés dans la même direction Z, représentée par les lignes en trait mixte, afin d'assurer un montage selon une direction verticale du dispositif de fixation.

Ces moyens de fixations 8 sont formés d'une vis 80 traversant des trous 55, 65 de la chape de train 5, 6 et des trous 73 du support de chape 7, et d'un écrou 81, disposé à l'extrémité débouchante de la vis 80 opposée à la chape de train 5, 6, assurant le maintien de la vis 80 correspondante.

Comme représenté en figure 11, la paroi inférieure du longeronnet 9 présente dans sa partie plane 90 deux trous 94 en vis-à-vis de deux trous 73 de sorte que la vis 80 traverse également la paroi du longeronnet 9 ; l'écrou 81 venant en butée contre la surface intérieure de ladite paroi.

Comme représenté en figure 12, l'écrou 81 vient en butée contre la surface intérieure de la plaque 70 du support de chape 7, assurant le maintien des deux vis 80 traversant les deux trous 73 du support de chape 7 ménagées en regard de la partie incurvée 91 du longeronnet 9. Cette partie incurvée 91 du longeronnet 9 ne présente pas de trou en vis-à-vis de ces deux trous 73 ; la plaque 70 n'étant pas en contact avec la partie incurvée 91 du longeronnet 9.

Ainsi, tout en assurant une fixation de la chape de train 5, 6 dans la partie incurvée 91 du longeronnet 9, ce système de fixation permet un montage dans la direction verticale Z grâce au support de chape 7 qui forme une interface intermédiaire de fixation de la chape 5, 6 sur le longeronnet 9, sans modifier ledit longeronnet 9.

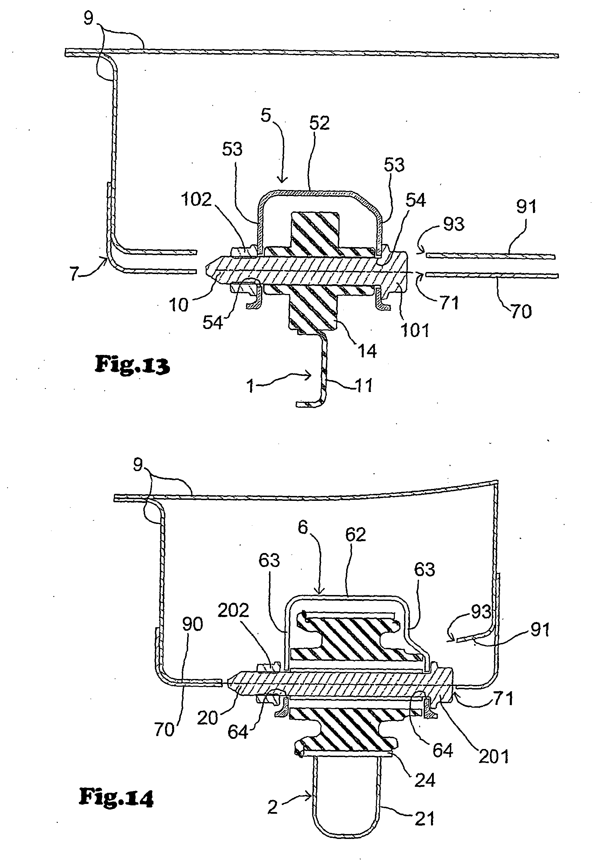

Les figures 13 et 14 représentent des vues en coupe du train arrière selon l'invention dans des plans verticaux alignés respectivement sur les axes d'articulation 10 et 20. Comme représenté sur ces deux figures, la demi coque 52, 62 et les ailes 53, 63 des chapes de train 5, 6 recouvrent partiellement la bague 14, 24 correspondante. L'axe d'articulation 10, 20 est constitué d'une tige formant vis, dont une extrémité se termine par une tête 101, 201 et l'autre extrémité par un filetage.

Cette tige 10, 20 traverse les ouvertures 54, 64 des ailes latérales 53, 63 de la chape de train 5, 6 et l'orifice délimité par la bague 14, 24 du bras longitudinal ; la tige 10, 20 étant limitée en translation par la tête de vis 101, 201 et par un écrou 102, 202 vissé sur la partie filetée de ladite tige 10, 20.

Comme représenté en figure 13, l'axe d'articulation 10 du train multibras s'étend dans le plan de la découpe 71 de la plaque 70, correspondant sensiblement au plan de la partie plane 90 du longeronnet 9, au diamètre de la tige 10 près. En effet, la tige 10 s'étend partiellement dans un plan en regard de la partie incurvée 91 du longeronnet 9.

Comme représenté en figure 14, l'axe d'articulation 20 du train semi-rigide s'étend également dans le plan de la découpe 71 de la plaque 70.

Les découpes respectivement 71 du support de chape 7 et 93 du longeronnet 9 sont conformées de sorte que la chape de train 5, 6 et l'axe d'articulation 10, 20 puissent être disposés à l'intérieur desdites découpes 71 et 93. On note que la découpe 71 s'étend en regard des parties plane 90 et incurvée 91 du longeronnet 9.

L'invention décrite ci-avant présente plusieurs autres avantages. Tout d'abord, le dispositif de fixation commun, composé du support de chape 7 et des moyens de fixation 8, permet de limiter la diversité du train arrière avec un même longeronnet 9. En effet, quelque soit l'orientation de l'axe d'articulation 10, 20 et la technologie du train arrière, le longeronnet 9 reste identique en forme, avec notamment ses trous 94 et sa découpe 93. En ne soudant qu'un seul support de chape 7 sur le longeronnet 9, l'invention assure également un gain économique lors des étapes de ferrage et d'emboutissage quelque soit le type de train.

De plus, le support de chape 7 permet de pouvoir assurer le positionnement longitudinal de l'articulation sans tomber dans la partie incurvée 91 du longeronnet 9, ce qui permet également d'avoir une mise en place à plat de la chape de train 5, 6 et de pouvoir assurer un montage dans une direction verticale, à accessibilité directe.

Enfin, le support de chape 7 permet d'éviter de ménager une découpe 93 dans le longeronnet 9 trop importante, sachant que ledit longeronnet 9 est une pièce essentielle de protection passive en situation de choc arrière à grande vitesse.

Bien entendu l'exemple de mise en oeuvre évoqué ci-dessus ne présente aucun caractère limitatif et d'autres détails et améliorations peuvent être apportés à l'invention, sans pour autant sortir du cadre de l'invention telle que revendiquée où d'autres formes de chapes, par exemple, peuvent être réalisées.

Une cale élastique cylindrique 15, 25 peut éventuellement être interposée entre la bague 14, 24 et l'axe d'articulation 10, 20. La cale élastique 15, 25 autorise un débattement de la première extrémité 11, 21 du bras longitudinal, 1, 2, en rotation autour de l'axe d'articulation 10, 20, en translation transversalement le long dudit axe 10, 20 dans les limites imposées par la chape de train 5, 6 et en pivotement par rapport à cet axe 10, 20 de façon à ce que l'axe de la bague 14, 24 soit incliné par rapport à l'axe d'articulation 10, 20.

Selon une variante, le support de chape 7 présente un moyen de centrage, non représenté, de formé générale cylindrique et faisant saillie perpendiculairement à la plaque 70 du support 7. Ce moyen de centrage est apte à coopérer avec un alésage formé dans l'embase 50, 60 de la chape de train 5, 6. Ainsi, la chape de train 5, 6 est mise en place sur le support de chape 7 par l'engagement du moyen de centrage dans l'alésage.

## Revendications

1. Train arrière de véhicule, notamment de véhicule automobile, comprenant deux bras longitudinaux (1 ; 2) comportant chacun une extrémité (11 ; 21) articulée dans une chape de train (5 ; 6) autour d'un axe d'articulation (10 ; 20), ladite chape de train (5 ; 6) étant fixée sur le châssis (C) du véhicule au moyen d'un dispositif de fixation, **caractérisé en ce que** ledit dispositif de fixation comprend un support de chape (7) disposé entre la chape de train (5 ; 6) et le châssis (C), ledit support de chape (7) comportant une plaque (70) fixée solidairement sur le châssis (C) et présentant une découpe (71) commune conformée pour recevoir des chapes de train (5 ; 6) présentant des axes d'articulation (10 ; 20) de direction (X10 ; X20) différente, ladite chape (5 ; 6) étant fixée sur ledit support (7) par des moyens de fixation (8).

2. Train arrière selon la revendication 1, **caractérisé en ce que** l'axe d'articulation (10, 20) s'étend sensiblement dans le plan de la découpe (71 ) du support de chape (7).

3. Train arrière selon l'une quelconque des revendications 1 et 2, **caractérisé en ce que** les moyens de fixation (8) sont orientés dans la même direction (Z) afin d'assurer une fixation de la chape de train (5 ; 6) sur le support de chape (7) selon cette même direction (Z).

4. Train arrière selon l'une quelconque des revendications 1 à 3, **caractérisé en ce que** une partie des moyens de fixation (8) est liée au châssis (C) et au support de chape (7), l'autre partie desdits moyens de fixation (8) n'étant pas liée au châssis (C).

5. Véhicule équipé d'un train arrière selon l'une quelconque des revendications précédentes, **caractérisé en ce que** le châssis (C) présente une découpe (93) en vis-à-vis de la découpe (71) au travers de laquelle pénètre partiellement la chape de train (5 ; 6).

6. Véhicule selon la revendication 5, **caractérisé en ce que** la chape (5 ; 6) est fixée sur un longeronnet (9) du châssis (C), ledit longeronnet (9) présentant une partie plane (90) prolongée par une partie incurvée (91) correspondant à une diminution de l'épaisseur du longeronnet (9), et **en ce que** l'axe d'articulation (10 ; 20) s'étend partiellement en regard de la partie incurvée (91) dans un plan parallèle à la partie plane (90) du longeronnet (9).

7. Véhicule selon la revendication 6, **caractérisé en ce que** le support de chape (7) est partiellement en contact avec la partie plane (90) du longeronnet (9), ledit support de chape (7) prolongeant ladite partie plane (90) en vis-à-vis de la partie incurvée (91) et assurant le positionnement de l'articulation dans un plan sensiblement parallèle à ladite partie plane (90).

8. Véhicule selon l'une quelconque des revendications 6 à 7, **caractérisé en ce que** l'axe d'articulation (10 ; 20) s'étend sensiblement dans un plan passant par la fibre neutre du longeronnet (9).

9. Véhicule selon l'une quelconque des revendications 6 à 8, **caractérisé en ce que** le support de chape (7) comporte des trous (73) disposés autour de la découpe (71) et destinés à laisser passer les moyens de fixation (8), et **en ce que** la partie plane (90) du longeronnet (9) comporte au moins un trou (94) en vis-à-vis d'un trou (73) du support de chape (7), un des moyens de fixation (8) traversant le longeronnet (9) et le support de chape (7) à travers lesdits trous (94, 73).

10. Véhicule selon la revendication 9, **caractérisé en ce que** le support de chape (7) comporte des trous (73) disposés en regard de la partie incurvée (91) du longeronnet (9), et **en ce que** ladite partie incurvée (91) ne comporte aucun trou en regard desdits trous (73) du support de chape (7), les moyens de fixation (8) traversant uniquement le support de chape (7) à travers lesdits trous (73) du support de chape (7).

## Claims

1. A rear axle of a vehicle, in particular of a motor vehicle, comprising two longitudinal arms (1;2) each having one end (11;21) articulated in an axle clevis (5) about an articulation axis (10;20), the said axle clevis (5;6) being fastened to the chassis (C) of the vehicle by means of a fastening device, **characterized in that** the said fastening device comprises a clevis support (7) arranged between the axle clevis (5;6) and the chassis (C), the said clevis support (7) comprising a plate (70) fastened securely on the chassis (C) and having a shared cutout (71) shaped to receive the axle clevises (5;6) having articulation axes (10;20) of different direction (X10; X20), the said clevis (5;6) being fastened on the said support (7) by fastening means (8).

2. The rear axle according to Claim 1, **characterized in that** the articulation axis (10, 20) extends substantially in the plane of the cutout (71) of the clevis support (7).

3. The rear axle according to any one of Claims 1 and 2, **characterized in that** the fastening means (8) are oriented in the same direction (Z) so as to ensure a fastening of the axle clevis (5;6) on the clevis support (7) according to this same direction (Z).

4. The rear axle according to any one of Claims 1 to 3, **characterized in that** one part of the fastening means (8) is connected to the chassis (C) and to the clevis support (7), the other part of the said fastening means (8) not being connected to the chassis (C).

5. A vehicle equipped with a rear axle according to any one of the preceding claims, **characterized in that** the chassis (C) has a cutout (93) opposite the cutout (71) through which the axle clevis (5;6) partially penetrates.

6. The vehicle according to Claim 5, **characterized in that** the clevis (5;6) is fastened on a small side rail (9) of the chassis (C), the said small side rail (9) having a flat part (90) extended by an incurvated part (91) corresponding to a reduction in the thickness of the small side rail (9), and **in that** the articulation axis (10;20) extends partially opposite the incurvated part (91) in a plane parallel to the flat part (90) of the small side rail (9).

7. The vehicle according to Claim 6, **characterized in that** the clevis support (7) is partially in contact with the flat part (90) of the small side rail (9), the said clevis support (7) extending the said flat part (90) opposite the incurvated part (91) and ensuring the positioning of the articulation in a plane substantially parallel to the said flat part (90).

8. The vehicle according to any one of Claims 6 to 7, **characterized in that** the articulation axis (10; 20) extends substantially in a plane passing through the neutral fiber of the small side rail (9).

9. The vehicle according to any one of Claims 6 to 8, **characterized in that** the clevis support (7) comprises holes (73) arranged around the cutout (71) and intended to allow the fastening means (8) to pass, and **in that** the flat part (90) of the small side rail (9) comprises at least one hole (94) opposite a hole (73) of the clevis support (7), with one of the fastening means (8) passing through the small side rail (9) and the clevis support (7) through the said holes (94, 73).

10. The vehicle according to Claim 9, **characterized in that** the clevis support (7) comprises holes (73) arranged opposite the incurvated part (91) of the small side rail (9), and **in that** the said incurvated part (91) does not have any hole opposite the said holes (73) of the clevis support (7), with the fastening means (8) passing solely through the clevis support (7) through the said holes (73) of the clevis support (7).

## Patentansprüche

1. Hinterachse für Fahrzeug, insbesondere Kraftfahrzeug, die zwei Längsarme (1; 2) aufweist, die jeweils ein Ende (11; 21) aufweisen, das in einer Achsgabel (5; 6) um eine Anlenkachse (10; 20) angelenkt ist, wobei die Achsgabel (5; 6) auf dem Chassis (C) des Fahrzeugs mittels einer Befestigungsvorrichtung befestigt ist, **dadurch gekennzeichnet, dass** die Befestigungsvorrichtung einen Gabelträger (7) aufweist, der zwischen der Achsgabel (5; 6) und dem Chassis (C) angeordnet ist, wobei der Gabelträger (7) eine Platte (70) aufweist, die fest auf dem Chassis (C) befestigt ist und einen gemeinsamen Ausschnitt (71) aufweist, der ausgebildet ist, um Achsgabeln (5; 6) aufzunehmen, die Anlenkachsen (10; 20) mit unterschiedlicher Richtung (X10; X20) aufweisen, wobei die Gabel (5; 6) auf dem Träger (7) mit Befestigungsmitteln (8) befestigt ist.

2. Hinterachse nach Anspruch des 1, **dadurch gekennzeichnet, dass** sich die Anlenkachse (10, 20) im Wesentlichen in der Ebene des Ausschnitts (71) des Gabelträgers (7) erstreckt.

3. Hinterachse nach einem der Ansprüche 1 und 2, **dadurch gekennzeichnet, dass** die Befestigungsmittel (8) in die gleiche Richtung (Z) ausgerichtet sind, um eine Befestigung jeder Achsgabel (5; 6) auf dem Gabelträger (7) entlang dieser gleichen Richtung (Z) sicherzustellen.

4. Hinterachse nach einem der Ansprüche 1 bis 3, **dadurch gekennzeichnet, dass** ein Teil der Befestigungsmittel (8) mit dem Chassis (C) und mit dem Gabelträger (7) verbunden ist, wobei der andere Teil der Befestigungsmittel (8) nicht mit dem Chassis (C) verbunden ist.

5. Fahrzeug, das mit einer Hinterachse nach einem der vorhergehenden Ansprüche ausgerüstet ist, **dadurch gekennzeichnet, dass** das Chassis (C) einen Ausschnitt (93) in Gegenüberlage mit dem Ausschnitt (71), durch welchen die Achsgabel (5; 6) teilweise eindringt, aufweist.

6. Fahrzeug nach Anspruch 5, **dadurch gekennzeichnet, dass** die Gabel (5; 6) auf einem Hilfslängsträger (9) des Chassis (C) befestigt ist, wobei dieser Hilfslängsträger (9) einen ebenen Teil (90) aufweist, der von einem gebogenen Teil (91), der einer Verringerung der Stärke des Hilfslängsträgers (9) entspricht, verlängert ist, und dass sich die Anlenkachse (10; 20) teilweise in Verlängerung des gebogenen Teils (91) in einer Ebene parallel zu dem ebenen Teil (90) des Hilfslängsträgers (9) erstreckt.

7. Fahrzeug nach Anspruch 6, **dadurch gekennzeichnet, dass** der Gabelträger (7) teilweise mit dem ebenen Teil (90) des Hilfslängsträgers (9) in Berührung ist, wobei der Gabelträger (7) den ebenen Teil (90) gegenüber dem gebogenen Teil (91) verlängert und das Positionieren der Anlenkung in einer Ebene sicherstellt, die im Wesentlichen zu dem ebenen Teil (90) parallel ist.

8. Fahrzeug nach einem der Ansprüche 6 bis 7, **dadurch gekennzeichnet, dass** sich die Anlenkachse (10; 20) im Wesentlichen in einer Ebene erstreckt, die durch die neutrale Achse des Hilfslängsträgers (9) verläuft.

9. Fahrzeug nach einem der Ansprüche 6 bis 8, **dadurch gekennzeichnet, dass** der Gabelträger (7) Löcher (73) aufweist, die um den Ausschnitt (71) angeordnet und dazu bestimmt sind, die Befestigungsmittel (8) durchzulassen, und dass der ebene Teil (90) des Hilfslängsträgers (9) mindestens ein Loch (94) gegenüber einem Loch (73) des Gabelträgers (7) aufweist, wobei eines der Befestigungsmittel (8) den Hilfslängsträger (9) und den Gabelträger (7) durch die Löcher (94, 73) durchquert.

10. Fahrzeug nach Anspruch 9, **dadurch gekennzeichnet, dass** der Gabelträger (7) Löcher (73) aufweist, die gegenüber dem gebogenen Teil (91) des Hilfslängsträgers (9) angeordnet sind, und dass der gebogene Teil (91) kein Loch gegenüber den Löchern (73) des Gabelträgers (7) aufweist, wobei die Befestigungsmittel (8) nur den Gabelträger (7) durch die Löcher (73) des Gabelträgers (7) durchqueren.
